(19) Europäisches Patentamt
European Patent Office
Office européen des brevets

(11) **EP 3 898 509 B1**

(12) **EUROPÄISCHE PATENTSCHRIFT**

(45) Veröffentlichungstag und Bekanntmachung des Hinweises auf die Patenterteilung:
**22.02.2023 Patentblatt 2023/08**

(21) Anmeldenummer: **18829804.6**

(22) Anmeldetag: **18.12.2018**

(51) Internationale Patentklassifikation (IPC):
***C01B 33/107*** *(2006.01)*

(52) Gemeinsame Patentklassifikation (CPC):
**C01B 33/1071; C01B 33/107**

(86) Internationale Anmeldenummer:
**PCT/EP2018/085443**

(87) Internationale Veröffentlichungsnummer:
**WO 2020/125944 (25.06.2020 Gazette 2020/26)**

(54) **VERFAHREN ZUR HERSTELLUNG VON CHLORSILANEN**

PROCESS FOR PREPARING CHLOROSILANES

PROCÉDÉ DE PRÉPARATION DE CHLOROSILANES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**27.10.2021 Patentblatt 2021/43**

(73) Patentinhaber: **Wacker Chemie AG 81737 München (DE)**

(72) Erfinder:
• **RIMBOECK, Karl-Heinz 84431 Heldenstein (DE)**

• **FREIHERR VON ARETIN, Tassilo 84489 Burghausen (DE)**
• **SUNDBERG, Johannes 84489 Burghausen (DE)**

(74) Vertreter: **Belz, Ferdinand et al Wacker Chemie AG Hanns-Seidel-Platz 4 81737 München (DE)**

(56) Entgegenhaltungen:
**WO-A2-02/48024      DE-A1- 3 938 897
DE-A1- 19 740 923     DE-A1-102008 041 974**

**Beschreibung**

Die Erfindung betrifft ein Verfahren zur Herstellung von Chlorsilanen in einem Wirbelschichtreaktor durch Umsetzung von einem Chlor-wasserstoff enthaltenden Reaktionsgas mit einer partikulären Kontaktmasse, enthaltend Silicium und gegebenenfalls einen Katalysator, wobei die Chlorsilane die allgemeinen Formel $H_nSiCl_{4-n}$ und/oder $H_mCl_{6-m}Si_2$ mit n = 1 bis 4 und m = 0 bis 4 aufweisen, dadurch gekennzeichnet, dass das Reaktordesign durch eine Kennzahl K1, die Beschaffenheit der Kontaktmasse ohne Katalysator durch eine Kennzahl $K2_{unkat}$, die Beschaffenheit der Kontaktmasse mit Katalysator durch eine Kennzahl $K2_{kat}$ und die Reaktionsbedingungen durch eine Kennzahl K3 beschrieben sind, wobei K1 einen Wert von 1 bis 10, $K2_{unkat}$ einen Wert von 0,1 bis 10, $K2_{kat}$ einen Wert von 0,005 bis 3 und K3 einen Wert von 1 bis 700 aufweist.

Die Herstellung von polykristallinem Silicium als Ausgangsmaterial für die Fertigung von Chips oder Solarzellen erfolgt üblicherweise durch Zersetzung seiner flüchtigen Halogenverbindungen, insbesondere Trichlorsilan (TCS, $HSiCl_3$).

Polykristallines Silicium (Polysilicium) kann mittels des Siemens-Prozesses in Form von Stäben erzeugt werden, wobei Polysilicium in einem Reaktor an erhitzten Filamentstäben abgeschieden wird. Als Prozessgas wird üblicherweise ein Gemisch aus TCS und Wasserstoff eingesetzt. Alternativ kann Polysilicium-Granulat in einem Wirbelschichtreaktor hergestellt werden. Dabei werden Siliciumpartikeln mittels einer Gasströmung in einer Wirbelschicht fluidisiert, wobei diese über eine Heizvorrichtung auf hohe Temperaturen aufgeheizt wird. Durch Zugabe eines siliciumhaltigen Reaktionsgases wie TCS erfolgt eine Pyrolysereaktion an der heißen Partikeloberfläche, wodurch die Partikel in ihrem Durchmesser wachsen.

Die Herstellung von Chlorsilanen, insbesondere TCS, kann im Wesentlichen durch drei Verfahren erfolgen, denen folgende Reaktionen zugrunde liegen (vgl. WO2010/028878A1 und WO2016/198264A1) :

$$(1) \qquad Si + 3HCl \rightarrow SiHCl_3 + H_2 + \text{Nebenprodukte}$$

$$(2) \qquad Si + 3SiCl_4 + 2H_2 \rightarrow 4SiHCl_3 + \text{Nebenprodukte}$$

$$(3) \qquad SiCl_4 + H_2 \rightarrow SiHCl_3 + HCl + \text{Nebenprodukte}$$

Als Nebenprodukte können weitere Halogensilane anfallen, beispielsweise Monochlorsilan ($H_3SiCl$), Dichlorsilan ($H_2SiCl_2$), Siliciumtetrachlorid (STC, $SiCl_4$) sowie Di- und Oligosilane. Ferner können Verunreinigungen wie Kohlenwasserstoffe, Organochlorsilane und Metallchloride Bestandteil der Nebenprodukte sein. Um hochreines TCS zu erzeugen, erfolgt daher anschließend üblicherweise eine Destillation.

Bei der Hydrochlorierung (HC) gemäß Reaktion (1) können aus metallurgischem Silicium ($Si_{mg}$) unter Zusatz von Chlorwasserstoff (HCl) Chlorsilane in einem Wirbelschichtreaktor hergestellt werden, wobei die Reaktion exotherm verläuft. Dabei erhält man in der Regel TCS und STC als Hauptprodukte.

Eine weitere Möglichkeit zur Herstellung von Chlorsilanen, insbesondere TCS, ist die thermische Konvertierung von STC und Wasserstoff in der Gasphase in Gegenwart oder Abwesenheit eines Katalysators.

Die Niedertemperaturkonvertierung (NTK) gemäß Reaktion (2) ist ein schwach endothermer Prozess und wird üblicherweise in Gegenwart eines Katalysators (z.B. kupferhaltige Katalysatoren oder Katalysatormischungen) durchgeführt. Die NTK kann in einem Wirbelschichtreaktor in Anwesenheit von $Si_{mg}$ unter hohem Druck (0,5 bis 5 MPa) bei Temperaturen zwischen 400 und 700°C erfolgen. Eine unkatalysierte Reaktionsführung ist unter Verwendung von $Si_{mg}$ und/oder durch Zusetzen von HCl zum Reaktionsgas möglich. Allerdings können sich andere Produktverteilungen ergeben und/oder niedrigere TCS-Selektivitäten erzielt werden als bei der katalysierten Variante.

Die Hochtemperaturkonvertierung gemäß Reaktion (3) ist ein endothermer Prozess. Dieses Verfahren findet üblicherweise in einem Reaktor unter hohem Druck bei Temperaturen zwischen 600 und 1.200°C statt.

Grundsätzlich sind die bekannten Verfahren aufwendig und energieintensiv. Die erforderliche Energiezufuhr, die in der Regel elektrisch erfolgt, stellt einen erheblichen Kostenfaktor dar. Die operative Performance (bspw. ausgedrückt durch die TCS-selektivitätsgewichtete Produktivität, die Entstehung wenig hochsiedender Nebenprodukte) der HC im Wirbelschichtreaktor hängt entscheidend von den einstellbaren Reaktionsparametern ab. Ferner ist es für eine kontinuierliche Prozessführung erforderlich, die Eduktkomponenten Silicium und HCl unter den Reaktionsbedingungen in den Reaktor einzubringen, was mit einem erheblichen technischen Aufwand verbunden ist. Vor diesem Hintergrund ist es wichtig, eine möglichst hohe Produktivität (Menge an gebildeten Chlorsilanen pro Zeiteinheit und Reaktionsvolumen) und eine möglichst hohe Selektivität bezogen auf das gewünschte Zielprodukt (üblicherweise TCS) zu realisieren (TCS-selektivitätsgewichtete Produktivität).

Die Herstellung von Chlorsilanen durch HC ist ein hochdynamischer Prozess. Für eine möglichst effiziente Durchführung und eine stetige Optimierung der HC ist es nötig, die zugrundeliegenden Dynamiken zu verstehen und sichtbar zu machen. Dafür sind generell zeitlich hochaufgelöste Methoden zum ProzessMonitoring notwendig.

Es ist bekannt, die Zusammensetzung in einer Produktmischung der HC mit hohem Personalaufwand im Labor durch Analyse von entnommenen Proben zu bestimmen (off-/at-line Messung). Diese findet jedoch immer zeitverzögert statt und liefert damit im besten Fall einen punktuellen, retrospektiven Ausschnitt eines diskreten Betriebszustandes eines Wirbelschichtreaktors. Werden aber zum Beispiel Produktgasströme mehrerer Reaktoren auf eine Kondensationsstrecke geleitet und wird lediglich eine Probe dieser Kondensatmischung entnommen, lassen sich auf Basis des Analyseergebnisses keine konkreten Rückschlüsse auf die Betriebszustände der einzelnen Reaktoren ziehen.

WO 02/48024 A2 beschreibt ein NTK-Verfahren zur Herstellung von Chlorsilanen, das durch ein Verhältnis aus den Verweilzeiten von HCl und Siliciumtetrachlorid gesteuert wird.

DE 39 38 897 A1 beschreibt ein NTK-Verfahren zur Herstellung von TCS durch Umsetzung von Siliciumpulver mit HCl in einem Wirbelschichtreaktor bei 280 bis 300°C.

DE 10 2008 041 974 A1 beschreibt ein energieautarkes NTK-Verfahren zur Herstellung von Chlorsilanen, wobei die Umsetzung von Silicium, Siliciumtetrachlorid und $H_2$ bei einem Druck von 25 bis 55 bar und einer Temperatur von 450 bis 650°C erfolgt. DE 197 40923 A1 beschreibt ein HC-Verfahren zur Herstellung von STC durch Umsetzung von Silicium mit HCl, wobei das Silicium vor oder während der HC-Reaktion mit einer Silanverbindung kontaktiert wird.

Um in höherer zeitlicher Auflösung die Zusammensetzung einer Produktmischung der HC messen zu können (bevorzugt an jedem einzelnen Reaktor), können Prozessanalysatoren im Gas- und/oder Kondensatstrom, beispielsweise Prozessgaschromatograph, angewandt werden (on-/in-line und/oder nicht-invasive Messung). Grundsätzlich nachteilig hierbei ist die beschränkte Anzahl einsetzbarer Geräte, aufgrund der hohen mechanischen Beanspruchung (Abrasion) und der aggressiven chemischen Umgebung. Ein weiterer Kostenfaktor sind die generell hohen Beschaffungs- und Wartungskosten.

Um diskrete Betriebszustände von HC-Reaktoren zu identifizieren, kann grundsätzlich auf verschiedene prozessanalytische Methoden zurückgegriffen werden, die wie folgt kategorisiert werden können (W.-D. Hergeth, On-Line Monitoring of Chemical Reactions: Ullmann's Encyclopedia of Industrial Chemistry, Wiley: Weinheim, Germany 2006).

| Kategorie | Probennahme | Probentransport | Analyse |
|---|---|---|---|
| off-line | manuell | zu entferntem Labor | automatisiert/ manuell |
| at-line | diskontinuierlich manuell | zu Analysegerät vor Ort | automatisiert/ manuell |
| on-line | automatisiert | integriert | automatisiert |
| in-line | integriert | kein Transport | automatisiert |
| noninvasiv | kein Kontakt | kein Transport | automatisiert |

Die Nachteile von Prozessanalysatoren können durch eine modellbasierte Methodik auf Basis sogenannter Softsensoren (virtuelle Sensoren) umgangen werden. Softsensoren greifen auf kontinuierlich bestimmte Messdaten von Betriebsparametern zurück, die zum Betreiben des Prozesses essenziell sind (z.B. Temperaturen, Drücke, Volumenströme, Füllstände, Leistungen, Massenströme, Ventilstellungen, etc.). So lassen sich beispielsweise Konzentrationen an Haupt- und Nebenprodukten vorhersagen.

Softsensoren basieren auf mathematischen Gleichungen und sind Abhängigkeitssimulationen von stellvertretenden Messgrößen zu einer Zielgröße. Mit anderen Worten, Softsensoren bilden Abhängigkeiten von korrelierenden Messgrößen ab und führen zu einem Zielparameter. Der Zielparameter wird also nicht direkt gemessen, sondern anhand von mit diesem korrelierenden Messgrößen bestimmt. Übertragen auf die HC bedeutet dies, dass beispielsweise der TCS-Gehalt oder die TCS-Selektivität nicht mit realen Messsensoren (z.B. Prozessgaschromatograph) bestimmt werden, sondern über Zusammenhänge zwischen Betriebsparametern berechnet werden kann.

Die Erstellung mathematischer Gleichungen für Softsensoren kann durch vollempirische (z.B. basierend auf einem abgewandelten Power-Law-Modell), durch teilempirische (z.B. basierend auf kinetischen Gleichungen zur Beschreibung einer Reaktionsgeschwindigkeit) oder durch fundamentale (z.B. basierend auf Grundgleichungen der Strömungsmechanik und Kinetik) Modellierung erfolgen. Die mathematischen Gleichungen können mit Hilfe von Prozesssimulationsprogrammen (z.B. OpenFOAM, ANSYS oder Barracuda) oder Regressionsprogrammen (z.B. Excel VBA, MATLAB oder Maple) abgeleitet werden.

Die Aufgabe der vorliegenden Erfindung bestand darin, die Wirtschaftlichkeit der Herstellung von Chlorsilanen mittels HC zu verbessern.

Diese Aufgabe wird gelöst durch ein Verfahren zur Herstellung von Chlorsilanen gemäß Reaktion (1) in einem Innenraum Wirbelschichtreaktors durch Umsetzung von einem HCl enthaltenden Reaktionsgas mit einer partikulären Kontaktmasse, enthaltend Silicium und gegebenenfalls einen Katalysator, wobei die Chlorsilane die allgemeinen Formel $H_nSiCl_{4-n}$ und/oder $H_mCl_{6-m}Si_2$ mit n = 1 bis 4 und m = 0 bis 4 aufweisen.

Das Reaktordesign wird dabei beschrieben durch eine dimensionslose Kennzahl K1, wobei

$$K1 = \varphi \cdot \frac{V_{Reaktor,eff}}{A_{ges,gekühlt} \cdot d_{hyd}}, \quad \text{mit} \qquad \text{(Gleichung 1)}$$

$\varphi$ = Füllgrad des Reaktors,
$V_{Reaktor,eff}$ = effektives Volumen des Reaktorinnenraums [m³],
$A_{ges,gekühlt}$ = Summe gekühlter Oberflächen im Reaktor [m²] und
$d_{hyd}$ = hydraulischer Reaktordurchmesser[m].

Die Beschaffenheit der Kontaktmasse ohne Anwesenheit eines Katalysators wird dabei beschrieben durch eine dimensionslose Kennzahl $K2_{unkat}$, wobei

$$K2_{unkat} = R_{Si} \cdot \frac{B_{AK}}{d_{32}}, \quad \text{mit} \qquad \text{(Gleichung 4)}$$

$B_{AK}$ = Breite der Partikelgrößenverteilung der Kontaktmasse [pm],
$d_{32}$ = Partikel-Sauterdurchmesser [pm] und
$R_{Si}$ = Reinheitsgrad des Siliciums (0,75 bis 0,99999).

Die Beschaffenheit der Kontaktmasse bei Anwesenheit eines Katalysators wird dabei beschrieben durch eine dimensionslose Kennzahl $K2_{kat}$, wobei

$$K2_{kat} = \frac{\delta_{rel}}{R_{Si}}, \quad \text{mit} \qquad \text{(Gleichung 6)}$$

$\delta_{rel}$ = relative Katalysatorverteilung in der Kontaktmasse.
Die Reaktionsbedingungen sind beschrieben durch eine dimensionslose Kennzahl K3, wobei

$$K3 = \frac{u_L}{v_F \cdot 10^6} \cdot \frac{p_{diff}}{g} \cdot \frac{1}{\rho_F}, \quad \text{mit} \qquad \text{(Gleichung 8)}$$

$u_L$ = Gaslehrrohrgeschwindigkeit [m/s],
$v_F$ = kinematische Viskosität des Fluids (gasförmiges Reaktionsgemisch im Reaktorinnenraum) [m²/s],
$\rho_F$ = Fluiddichte [kg/m³] und
$p_{diff}$ = Druckverlust über die Wirbelschicht [kg/m*s²].

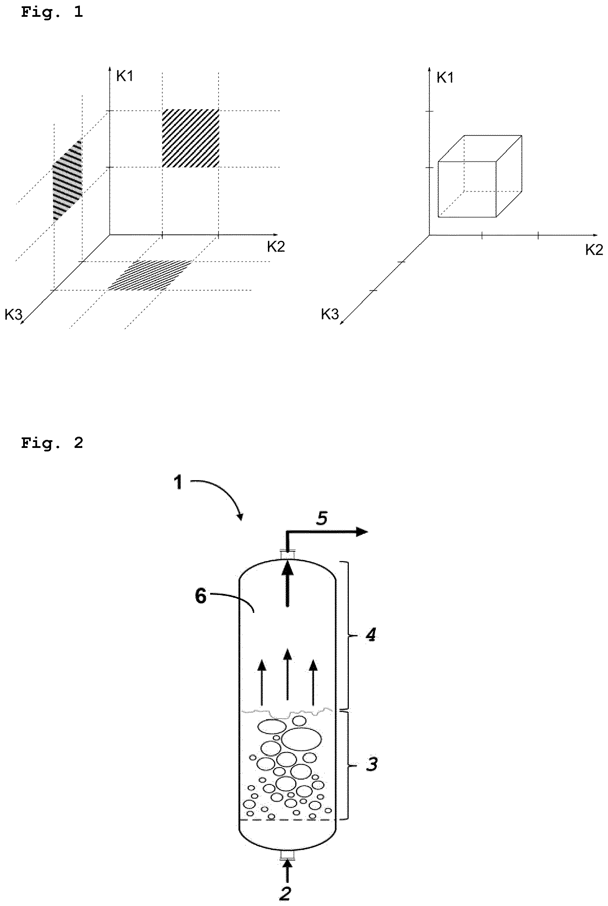

K1 wird bei dem Verfahren ein Wert von 1 bis 10, $K2_{unkat}$ ein Wert von 0,1 bis 10, $K2_{kat}$ ein Wert von 0,005 bis 3 und K3 ein Wert von 1 bis 700 vorgegeben. Innerhalb dieser Bereiche ist die Produktivität des Verfahrens besonders hoch.
Durch den Einsatz von physischen und virtuellen Methoden zum Prozessmonitoring konnten neue Zusammenhänge bei der HC identifiziert werden, die es ermöglichen, die HC durch die drei Kennzahlen K1, K2 ($K2_{unkat}$ oder $K2_{kat}$) und K3 so zu beschreiben, dass sich das Verfahren durch Wahl bestimmter Parametereinstellungen und Kombinationen daraus besonders wirtschaftlich betreiben lässt. Das erfindungsgemäße Verfahren ermöglicht eine integrierte, prädiktive Prozesssteuerung im Sinne einer "Advanced Process Control (APC)" für die HC. Wird die HC, insbesondere durch Prozessregelungssysteme (bevorzugt APC-Regler), in den erfindungsgemäßen Bereichen für K1, K2 ($K2_{unkat}$ oder $K2_{kat}$) und K3 durchgeführt, ergibt sich eine größtmögliche wirtschaftliche Effizienz. In einem Verbund zur Herstellung von Siliciumprodukten (z.B. Polysilicium verschiedener Qualitätsstufen) kann durch Einbindung des Verfahrens der Produktionsablauf optimiert und Herstellungskosten gesenkt werden.
Die Bereiche für die Kennzahlen K1, K2 ($K2_{unkat}$ oder $K2_{kat}$) und K3 spannen, eingetragen in ein kartesisches Koordinatensystem, einen dreidimensionalen Raum auf, der einen besonders wirtschaftlichen Betriebsbereich für die HC darstellt. In der Figur 1 ist ein solcher Betriebsbereich schematisch dargestellt. Insbesondere wird durch das erfindungsgemäße Verfahren auch die Auslegung neuer Wirbelschichtreaktoren für die HC erheblich vereinfacht.
Durch Softsensoren können zudem Performance-Parameter wie bspw. die TCS-Selektivität als Funktion von K1, K2 ($K2_{unkat}$ oder $K2_{kat}$) und K3 abgebildet werden. Die dadurch in hoher zeitlicher Auflösung ermittelten Performance-Daten können als zu regelnde Größe an eine Prozessregelung, insbesondere modellprädiktive Regelung, weitergegeben werden und auf diese Weise der Prozess wirtschaftlich optimiert betrieben werden.

Gemäß einer bevorzugten Ausführung des Verfahrens weist K1 einen Wert von 1,2 bis 9, bevorzugt von 1,3 bis 7, besonders bevorzugt von 1,5 bis 5,5, auf.

Vorzugsweise hat $K2_{unkat}$ einen Wert von 0,5 bis 8, bevorzugt von 0,75 bis 6, besonders bevorzugt von 1 bis 5.

$K2_{kat}$ hat vorzugsweise einen Wert von 0,0075 bis 2, bevorzugt von 0,009 bis 1, besonders bevorzugt von 0,01 bis 0,5.

K3 weist vorzugsweise einen Wert von 1,5 bis 600, bevorzugt von 2 bis 450, besonders bevorzugt von 3 bis 300, auf.

Die Figur 2 zeigt schematisch einen Wirbelschichtreaktor 1 mit einem Reaktorinnenraum 6 zur Durchführung des Verfahrens. Das Reaktionsgas 2 wird vorzugsweise von unten und gegebenenfalls von der Seite (z.B. tangential oder orthogonal zum Gasstrom von unten) in die partikuläre Kontaktmasse eingeblasen, wodurch die Partikel der Kontaktmasse fluidisiert werden und eine Wirbelschicht 3 bilden. In der Regel wird zum Starten der Reaktion mittels einer außerhalb des Reaktors angeordneten Heizvorrichtung (nicht dargestellt) die Wirbelschicht 3 beheizt. Während des kontinuierlichen Betriebs ist üblicherweise kein Heizen erforderlich. Ein Teil der Partikel wird mit der Gasströmung aus der Wirbelschicht 3 in den Freiraum 4 oberhalb der Wirbelschicht 3 transportiert. Der Freiraum 4 ist durch eine sehr geringe Feststoffdichte gekennzeichnet, wobei diese in Richtung Reaktoraustritt abnimmt. Der Partikelanteil, der mit der Gasströmung den Reaktor verlässt, wird als Partikelaustrag 5 bezeichnet. Ein Beispiel eines Wirbelschichtreaktors ist in der US4092446 beschrieben.

## K1 - Das Füllgrad-gewichtete Reaktordesign

Die Kennzahl K1 setzt über die Gleichung 1 Parameter der Reaktorgeometrie, nämlich das effektive Volumen des Reaktorinnenraums $V_{Reaktor,eff}$, die Summe der gekühlten Oberflächen im Reaktorinnenraum $A_{ges,gekühlt}$ sowie den hydraulischen Durchmesser $d_{hyd}$ mit der Wirbelschicht, ausgedrückt durch den dimensionslosen Füllgrad $\varphi$, in Beziehung.

$V_{Reaktor,eff}$ entspricht dem gesamten Volumen des Reaktorinnenraums abzüglich dem Volumen aller Einbauten. $V_{Reaktor,eff}$ beträgt 1 bis 60 m$^3$, bevorzugt 3 bis 40 m$^3$, besonders bevorzugt 4 bis 30 m$^3$.

Untersuchungen zur Fluiddynamik in Wirbelschichtreaktoren haben ergeben, dass die Geometrie des Innenraums des Wirbelschichtreaktors maßgeblich die Fluiddynamik und damit auch die Produktivität beeinflussen kann. Unter Innenraum soll dabei insbesondere der Bereich verstanden werden, der mit dem Reaktionsgas und/oder den Partikeln der Kontaktmasse in Berührung kommen kann (also beispielsweise sowohl der Freiraum als auch der Bereich, in dem sich die Wirbelschicht bildet). Die Geometrie des Innenraums wird neben allgemeinen konstruktiven Merkmalen wie Höhe, Breite, Form (z.B. Zylinder oder Konus) auch durch sich im Innenraum befindliche Einbauten bestimmt. Bei den Einbauten kann es sich insbesondere um Wärmetauschereinheiten, Versteifungsebenen, Zuführungen (Leitungen) zum Einbringen des Reaktionsgases und Vorrichtungen zur Verteilung des Reaktionsgases (z.B. Gasverteilerplatten) handeln.

Die Summe der gekühlten Oberflächen im Reaktorinnenraum $A_{ges,gekühlt}$ gibt an, wieviel Fläche zum gezielten Wärmeaustausch genutzt werden kann. Beispielsweise setzt sich $A_{ges,gekühlt}$ aus den Oberflächen eines Kühlregisters (bestehend aus einzelnen Lanzen, U-Rohren o.Ä.) sowie einer Mantelkühlung zusammen.

Der hydraulische Durchmesser $d_{hyd}$ des Wirbelschichtreaktors ist eine ingenieurtechnische Kennzahl, mit der sich strömungsmechanische Reibungs- und Oberflächeneffekte von Einbauten, Kanälen oder anderen Geometrien beschreiben lassen, indem diese auf einen äquivalenten Durchmesser zurückgeführt werden. $d_{hyd}$ berechnet sich nach Gleichung 2.

$$d_{hyd} = 4 \cdot \frac{A_{q,frei}}{U_{ges,benetzt}}, \; \texttt{mit} \qquad \qquad \texttt{(Gleichung 2)}$$

$A_{q,frei}$ = freier Strömungsquerschnitt im Innenraum [m$^2$] und

$U_{ges,benetzt}$ = benetzter Umfang aller Einbauten [m] .

Beim freien Strömungsquerschnitt handelt es sich um den Querschnitt des Teils des Reaktors (ohne Einbauten) in der sich die Wirbelschicht ausbildet.

Der hydraulische Anlagendurchmesser $d_{hyd}$ beträgt 0,7 bis 1,8 m, bevorzugt 0,8 bis 1,7 m, besonders bevorzugt 0,9 bis 1,6 m.

Die Vermessung aller Objekte (Durchmesser des Innenraums, Umfang der Einbauten, gekühlte Oberflächen) können beispielsweise mittels Laser-Messungen/3D-Scans (z.B. ZEISS COMET L3D 2) ermittelt werden. Üblicherweise können solche Größen auch den Angaben der Reaktorhersteller entnommen oder anhand von Konstruktionszeichnungen berechnet werden.

Der Füllgrad $\varphi$ gibt an, wieviel Kontaktmasse im Reaktorinnenraum vorhanden ist. $\varphi$ berechnet sich nach Gleichung 3.

$$\varphi = 10 \cdot \frac{p_{diff}}{\rho_p \cdot g}, \quad \texttt{mit} \qquad\qquad \texttt{(Gleichung 3)}$$

$p_{diff}$ = Druckverlust über die Wirbelschicht [kg/m*s$^2$],
$\rho_p$ = Partikelfeststoffdichte der Kontaktmasse [kg/m$^3$] und
$g$ = Erdbeschleunigung [m/s$^2$].

Die Partikelfeststoffdichte $\rho_p$ kann näherungsweise als konstant angesehen werden. Ein typischer Wert ist z.B. 2336 kg/m$^3$ (Dichte Si bei 20°C). Die Messung kann mit einem Pyknometer erfolgen.

Der Druckverlust über die Wirbelschicht $p_{diff}$ beträgt 10.000 bis 400.000 kg/m*s$^2$, bevorzugt 20.000 bis 100.000 kg/m*s$^2$, besonders bevorzugt 30.000 bis 80.000 kg/m*s$^2$. Zur Bestimmung von $p_{diff}$ wird der Druck sowohl in einer Zuleitung des Reaktionsgases als auch in einer Ableitung des Abgases beispielsweise mit einem Manometer gemessen. Aus der Differenz ergibt sich $p_{diff}$.

## K2$_{unkat}$ und K2$_{kat}$ - Die Beschaffenheit der Kontaktmasse

$K2_{unkat}$ und $K2_{kat}$ beschreiben über die Gleichungen 4 bzw. 6 die Beschaffenheit, insbesondere die Körnung, der eingesetzten partikulären Kontaktmasse.

$K2_{unkat}$ wird für die nicht katalytische Variante der HC herangezogen. Sie setzt sich aus dem dimensionslosen Reinheitsgrad des Siliciums $R_{Si}$ (0,75 bis 0,9999), der Breite der Partikelgrößenverteilung der Kontaktmasse $B_{AK}$ sowie dem Sauterdurchmesser $d_{32}$ zusammen. $B_{AK}$ ergibt sich aus Gleichung 5.

$$\texttt{B}_{\texttt{AK}} = \texttt{d}_{90} - \texttt{d}_{10}, \quad \texttt{wobei} \qquad\qquad \texttt{(Gleichung 5)}$$

$d_{10}$ [pm] ein Maß ist für die Größe der kleineren Partikel und der Wert $d_{90}$ [pm] ein Maß ist für die größeren Partikel in der Fraktion oder Körnungsmischung. $d_{10}$ und $d_{90}$ sind generell wichtige Parameter für die Charakterisierung einer Partikelgrößenverteilung. Der Wert $d_{10}$ bedeutet beispielsweise, dass 10 % aller Partikel kleiner sind als der angegebene Wert. Der Wert von $d_{50}$ ist ferner als mittlere Partikelgröße definiert (vgl. DIN 13320).

Die Werte für $d_{10}$ sowie $d_{90}$ werden so gewählt, dass sich eine Breite der Partikelgrößenverteilung der Kontaktmasse $B_{AK}$ von 10 bis 1.500 $\mu$m, besonders bevorzugt von 100 bis 1.000 $\mu$m, insbesondere von 300 bis 800 $\mu$m ergibt.

Der Sauterdurchmesser $d_{32}$ entspricht dem mittleren, volumengleichen Partikeldurchmesser der Kontaktmasse und beträgt 10 bis 1.000 $\mu$m, bevorzugt 50 bis 800 $\mu$m, besonders bevorzugt 100 bis 500 $\mu$m.

Die Bestimmung der Breite der Korngrößenverteilung bzw. des Sauterdurchmessers kann nach ISO 13320 (Laserbeugung) und/oder ISO 13322 (Bildanalyse) erfolgen. Eine Berechnung von mittleren Partikelgrößen/-durchmessern aus Partikelgrößenverteilungen kann nach DIN ISO 9276-2 erfolgen.

$K2_{kat}$ wird für die katalytische Variante der HC herangezogen. Sie ist gemäß Gleichung 6 das Verhältnis aus dem Reinheitsgrad des Siliciums der verwendeten Kontaktmasse $R_{Si}$ und der relativen Katalysatorverteilung in der Kontaktmasse $\delta_{rel}$.

Unter dem Begriff der Katalysatorverteilung sollen hier auch Mischungen von Katalysatoren und/oder Promotoren verstanden werden, die dem Wirbelschichtreaktor zugesetzt werden können. Die relative Katalysatorverteilung in der Kontaktmasse ist ein Maß für die Benetzung bzw. generelle Benetzbarkeit der partikulären Kontaktmasse mit dem Katalysator, der Katalysatormischung oder der Katalysator-Promotormischung.

$\delta_{rel}$ kann nach Gleichung 7 berechnet werden.

$$\delta_{rel} = \lambda \cdot \frac{O_{spez,Kat}}{O_{spez,SiK}}, \quad \texttt{mit} \qquad\qquad \texttt{(Gleichung 7)}$$

A = Massenverhältnis Katalysator/Silicium-Körnung bzw. Katalysator-Beladung,
$O_{spez,Kat}$ = mittlere spezifische Oberfläche des Katalysators [m$^2$/kg] und
$O_{spez,SiK}$ = mittlere spezifische Oberfläche der Silicium-Körnung [m$^2$/kg].

Die relative Katalysatorverteilung in der Kontaktmasse $\delta_{rel}$ beträgt 0,005 bis 3, bevorzugt 0,009 bis 2, besonders bevorzugt 0,01 bis 0,5.

Die mittlere spezifische Oberfläche kann z.B. mittels Gasadsorption nach dem BET-Verfahren direkt bestimmt werden (ISO 9277).

Unter "Körnung" soll insbesondere eine Mischung aus Siliciumpartikeln verstanden werden, die beispielsweise durch Zerkleinern von stückigem Silicium, insbesondre $Si_{mg}$, mittels Brech- und Mahlanlagen hergestellt werden kann. Das stückige Silicium kann eine mittlere Partikelgröße von > 10 mm, bevorzugt > 20 mm, besonders bevorzugt > 50 mm aufweisen. Die maximale mittlere Partikelgröße ist vorzugsweise 500 mm. Körnungen lassen sich im Wesentlichen durch Sieben und/oder Sichten in Fraktionen klassieren.

Körnungen können hergestellt werden durch/aus

- Brechen und Mahlen von stückigem Silicium; anschließend ggf. sieben und/oder sichten (Klassieren)
- Abfällen, insbesondere in Form von Stäuben, die bei der Bearbeitung (Brechen, Mahlen, Sägen) verschiedener Siliciumarten (Wafer, poly-/multi-/einkristallines Silicium, $Si_{mg}$) anfallen und ggf. klassiert und/oder prozessiert (z.B. kompaktieren/agglomerieren, bspw. in Form von Pellets) werden; in Form von Über- und/oder Unterkorn, wobei es sich um Fraktionen handelt, die außerhalb der Zielkörnung liegen,
- Verfahren zur Herstellung von granuliertem $Si_{mg}$ oder Polysilicium und der dabei entstehende Nebenanfall, insbesondere Siliciumstäube (mittlerer Partikeldurchmesser < 10 $\mu$m, ggf. prozessiert (kompaktieren/agglomerieren), bspw. in Form von Pellets).

Eine Mischung verschiedener Körnungen kann als Körnungsmischung und die Körnungen, aus denen die Körnungsmischung besteht, als Körnungsfraktionen bezeichnet werden. Körnungsfraktionen können relativ zueinander in Grobkornfraktionen und Feinkornfraktionen eingeteilt werden. Grundsätzlich ist bei einer Körnungsmischung möglich, mehr als eine Körnungsfraktion in Grobkornfraktion und/oder Feinkornfraktion einzuteilen. Die Körnung, die in den Wirbelschichtreaktor eingebracht wird, kann als Arbeitskörnung bezeichnet werden. Bei der Kontaktmasse handelt es sich generell um die Körnungsmischung, die im Reaktor mit dem Reaktionsgas in Kontakt kommt und reagiert.

Bei der Kontaktmasse handelt es sich insbesondere um eine Körnungsmischung. Vorzugsweise umfasst die Kontaktmasse keine weiteren Komponenten. Bevorzugt handelt es sich um Silicium, das höchstens 5 Gew.-%, besonders bevorzugt höchstens 2 Gew.-%, insbesondere höchstens 1 Gew.-%, andere Elemente als Verunreinigungen enthält. Vorzugsweise handelt es sich um $Si_{mg}$, das üblicherweise eine Reinheit von 98 bis 99,9 % aufweist. Typisch ist beispielsweise eine Zusammensetzung mit 98 % Silicium, wobei sich die übrigen 2 % in der Regel zum größten Teil aus den folgenden Elementen zusammensetzen: Fe, Ca, Al, Ti, Cu, Mn, Cr, V, Ni, Mg, B, C, P und O. Ferner können folgende Elemente enthalten sein: Co, W, Mo, As, Sb, Bi, S, Se, Te, Zr, Ge, Sn, Pb, Zn, Cd, Sr, Ba, Y und Cl. Die Angabe der Reinheit von Silicium ist demnach so zu verstehen, dass in der zu messenden Siliciumprobe der Gehalt der genannten Elemente bestimmt wird und diese dann in Summe zur Berechnung des Reinheitsgrads (bspw. in Gew.-%) herangezogen werden. Wird ein gesamter Gehalt an Verunreinigungen mit 2 Gew.-% bestimmt, so ergibt sich ein Siliciumgehalt von 98 Gew.-%. Es ist allerdings auch die Verwendung von Silicium einer geringeren Reinheit von 75 bis 98 Gew.-% möglich. Vorzugsweise ist jedoch der Siliciumanteil größer als 85 Gew.-%, besonders bevorzugt größer als 95 Gew.-%.

Einige der als Verunreinigung im Silicium vorliegenden Elemente weisen eine katalytische Aktivität auf. Daher ist der Zusatz eines Katalysators grundsätzlich nicht erforderlich. Allerdings kann das Verfahren durch die Gegenwart eines oder mehrerer zusätzlicher Katalysatoren positiv beeinflusst werden, insbesondere hinsichtlich seiner Selektivität.

Gemäß einer Ausführungsform handelt es sich bei dem eingesetzten Silicium um eine Mischung aus $Si_{mg}$ und Reinstsilicium (Reinheit > 99,9 %). Anders ausgedrückt handelt es sich also um eine Körnungsmischung, die $Si_{mg}$ und Reinstsilicium umfasst. Vorzugsweise beträgt dabei der Anteil an $Si_{mg}$ mindestens 50 Gew.-%, bevorzugt mindestens 70 Gew.-%, besonders bevorzugt mindestens 90 Gew.-%, bezogen auf das Gesamtgewicht der Körnungsmischung. Insbesondere ist das Reinstsilicium Bestandteil der Feinkornfraktion. Ferner kann die Feinkornfraktion ausschließlich Reinstsilicium enthalten.

Gemäß einer weiteren Ausführungsform handelt es sich bei dem eingesetzten Silicium um $Si_{mg}$ und Reinstsilicium, wobei der Anteil an $Si_{mg}$ kleiner ist als 50 Gew.-%, bezogen auf das Gesamtgewicht der Körnungsmischung. Vorzugsweise umfasst dabei die Körnungsmischung bzw. die Kontaktmasse zusätzlich einen Katalysator. Das Reinstsilicium und/oder der Katalysator sind bevorzugt Bestandteile der Feinkornfraktion. Vorzugsweise besteht die Feinkornfraktion aus Reinstsilicium.

Gemäß einer anderen Ausführungsform handelt es sich bei dem eingesetzten Silicium ausschließlich um Reinstsilicium und die Kontaktmasse bzw. Körnungsmischung enthält einen Katalysator.

Grundsätzlich lässt sich Reinstsilicium bereits unter Anwesenheit geringer Mengen eines der Elemente Co, Mo und W (in der Regel bereits als Verunreinigung in Reinstsilicium enthalten) durch HC umsetzen. Eine gemeinsame Umsetzung mit $Si_{mg}$, welches größere Mengen der katalytisch aktiven Elemente als Verunreinigung enthält, ist nicht zwingend erforderlich. Allerdings kann durch Zusatz eines Katalysators die Chlorsilanselektivität noch erhöht werden.

Bei dem vorliegenden Verfahren kann dies insbesondere dann der Fall sein, wenn der Anteil an Reinstsilicium in der Körnungsmischung größer ist als der Anteil an $Si_{mg}$ und/oder wenn die Körnungsmischung ausschließlich Reinstsilicium umfasst.

Bei dem Katalysator kann es sich um ein oder mehrere Elemente aus der Gruppe mit Fe, Cr, Ni, Co, Mn, W, Mo, V, P, As, Sb, Bi, O, S, Se, Te, Ti, Zr, C, Ge, Sn, Pb, Cu, Zn, Cd, Mg, Ca, Sr, Ba, B, Al, Y, Cl handeln. Vorzugsweise ist der Katalysator ausgewählt aus der Gruppe mit Fe, Al, Ca, Ni, Mn, Cu, Zn, Sn, C, V, Ti, Cr, B, P, O, Cl und Mischungen daraus. Wie bereits erwähnt können diese katalytisch aktiven Elemente bereits in Silicium als Verunreinigung in einem bestimmten Anteil enthalten sein, beispielsweise in oxidischer oder metallischer Form, als Silicide oder in anderen metallurgischen Phasen, oder als Oxide oder Chloride. Ihr Anteil hängt von der Reinheit des verwendeten Siliciums ab.

Der Katalysator kann beispielsweise in metallischer, legierter und/oder salzartiger Form der Kontaktmasse zugesetzt werden. Dabei kann es sich insbesondere um Chloride und/oder Oxide der katalytisch aktiven Elemente handeln. Bevorzugte Verbindungen sind CuCl, $CuCl_2$, CuP, CuO oder Mischungen daraus. Die Kontaktmasse kann ferner Promotoren enthalten, beispielsweise Zn und/oder $ZnCl_2$ und/oder Sn.

Die elementare Zusammensetzung des eingesetzten Siliciums und der Kontaktmasse kann beispielsweise mittels Röntgenfluoreszenzanalyse erfolgen.

Der Katalysator ist bezogen auf Silicium vorzugsweise in einem Anteil von 0,1 bis 20 Gew.-%, besonders bevorzugt von 0,5 bis 15 Gew.-%, insbesondere von 0,8 bis 10 Gew.-%, insbesondere bevorzugt von 1 bis 5 Gew.-%, vorhanden.

**K3** - **Reaktionsbedingen**

Die Kennzahl K3 setzt nach Gleichung 8 die wichtigsten Parameter der HC miteinander in Beziehung. In ihr enthalten sind die Gasleerrohrgeschwindigkeit $u_L$, der Druckverlust über die Wirbelschicht $p_{diff}$, die kinematische Viskosität der Fluids $v_F$ und die Fluiddichte $\rho_F$. Unter Fluid ist das gasförmige Reaktionsgemisch im Reaktorinnenraum zu verstehen.

Die Gaslehrrohrgeschwindigkeit $u_L$ beträgt 0,05 bis 4 m/s, bevorzugt 0,06 bis 2 m/s, besonders bevorzugt 0,1 bis 1 m/s, insbesondere 0,15 bis 0,55 m/s.

Die Fluiddichte $\rho_F$ und die kinematische Viskosität $v_F$ können durch Simulationen von (Phasen-)Gleichgewichtszuständen unter Verwendung einer verfahrenstechnischen Software ermittelt werden. Diese Simulationen basieren üblicherweise auf angepassten Zustandsgleichungen, die sich bei variierenden physikalischen Parametern (z.B. p und T) auf real gemessene Zusammensetzungen des Reaktionsgemisches sowohl in der Gas- als auch in der Flüssigphase stützen. Dieses Simulationsmodell kann anhand realer Betriebszustände/-parameter validiert werden und ermöglicht so die Festlegung von Betriebsoptima hinsichtlich der Parameter $\rho_F$ und $v_F$.

Die Bestimmung von Phasengleichgewichten kann beispielsweise mit einer Messapparatur erfolgen (z.B. modifizierte Umlaufapparatur nach Röck und Sieg, bspw. MSK Baraton Typ 690, MSK Instruments). Dabei werden für ein Stoffgemisch durch Variation von physikalischen Einflussgrößen wie Druck und Temperatur Aggregatszustandsänderungen hervorgerufen. Daraufhin werden die verschiedenen Aggregatzustände analysiert und die Komponentenzusammensetzung bestimmt, beispielsweise mit einem Gaschromatograph. Über rechnergestützte Modellierung können Zustandsgleichungen angepasst werden, um die Phasengleichgewichte zu beschreiben. Die Daten werden in verfahrenstechnische Softwareprogramme übertragen, so dass Phasengleichgewichte berechnet werden können.

Die kinematische Viskosität ist ein Maß für die Impulsübertragung quer zur Strömungsrichtung in einem bewegten Fluid. Dabei kann die kinematische Viskosität $v_F$ über die dynamische Viskosität und die Fluiddichte beschrieben werden. Die Dichte kann für Flüssigkeiten beispielsweise über die Rackett-Gleichung angenähert werden, für Gase kann eine Annäherung über eine Zustandsgleichung, z.B. Peng-Robinson, erfolgen. Die Messung der Dichte kann mit einem digitalen Dichtemessgerät (z.B. DMA 58, Fa. Anton Paar) unter Verwendung der Biegeschwingermethode (Eigenfrequenzmessung) durchgeführt werden.

Die Fluiddichte $\rho_F$ liegt in einem Bereich von 1,5 bis 5 kg/m$^3$. Die kinematische Viskosität $v_F$ liegt in einem Bereich von $3 \cdot 10^{-6}$ bis $2,5 \cdot 10^{-5}$ m$^2$/s.

Der absolute Druck im Wirbelschichtreaktor, bei welchem das erfindungsgemäße Verfahren vorzugsweise durchgeführt wird, beträgt 0,1 bis 1 MPa, besonders bevorzugt 0,13 bis 0,7 MPa, insbesondere 0,15 bis 0,5 MPa.

Das Verfahren wird vorzugsweise in einem Temperaturbereich von 280 bis 400°C, besonders bevorzugt von 300 bis 380°C, insbesondere von 320 bis 360°C, durchgeführt.

Vorzugsweise enthält das Reaktionsgas mindestens 50 Vol.-%, besonders bevorzugt mindestens 70 Vol.-%, insbesondere mindestens 90 Vol.-%, HCl. Neben HCl kann das Reaktionsgas ferner ein oder mehrere Komponenten ausgewählt aus der Gruppe mit $H_2$, $H_nSiCl_{4-n}$ (n = 0-4), $H_mCl_{6-m}Si_2$ (m = 0-6), $H_qCl_{6-q}Si_2O$ (q = 0-4), $CH_4$, $C_2H_6$, CO, $CO_2$, $O_2$, $N_2$ enthalten. Diese Komponenten können beispielsweise aus in einem Verbund zurückgewonnenem HCl stammen.

Das Reaktionsgas kann ferner ein Trägergas enthalten, beispielsweise Stickstoff oder ein Edelgas wie Argon.

Ferner kann dem Reaktionsgas Wasserstoff zugesetzt werden, insbesondere um die Gleichgewichtslage der Reaktion zu beeinflussen. Wasserstoff kann auch als Verunreinigung in zurückgewonnenem HCl enthalten sein.

Die Bestimmung der Zusammensetzung des Reaktionsgases erfolgt üblicherweise vor der Zuleitung zum Reaktor über Raman- und Infrarotspektroskopie sowie Gaschromatographie. Dies kann sowohl über stichprobenartig entnommene Proben und anschließende "offline-Analysen" als auch über in das System eingebundene "online"-Analysengeräte erfolgen.

Das Verfahren ist bevorzugt in einen Verbund zur Herstellung von Polysilicium eingebunden. Der Verbund umfasst vorzugsweise folgende Prozesse: Erzeugung von TCS gemäß dem erfindungsgemäßen Verfahren, Aufreinigung des erzeugten TCS zu TCS mit Halbleiterqualität, Abscheidung von Polysilicium, bevorzugt nach dem Siemens-Verfahren oder als Granulat.

**Beispiele:**

Um die gewonnen Erkenntnisse und Zusammenhänge auf die Produktivität bei der Herstellung von Chlorsilanen zu übertragen und um die Bereiche für die Kennzahlen K1, K2 (K2$_{unkat}$ oder K2$_{kat}$) und K3 (Arbeitsbereiche) zu definieren, wurden eingehende Untersuchungen an kontinuierlich betriebenen Wirbelschichtreaktoren unterschiedlicher Größe durchgeführt.

Es wurden verschiedene Experimente V durchgeführt (Tabelle 1: V1 bis V28 für die unkatalysierte HC und Tabelle 2: V1 bis V16 für die katalysierte HC), wobei jeweils der hydraulische Anlagendurchmesser $d_{hyd}$ mit Werten von 0,7 m bis 1,8 m, die Gasleerrohrgeschwindigkeit $u_L$ mit Werten von 0,05 m/s bis 4 m/s, der Partikel-Sauterdurchmesser $d_{32}$ mit Werten von 5 $\mu$m bis 1.000 $\mu$m, die Breite der Arbeitskörnung $B_{AK}$ mit Werten von 10 bis 1.500 $\mu$m bzw. die relative Katalysator-Verteilung über die Kontaktmasse $\delta_{rel}$ mit Werten von 0,005 bis 3, der Reinheitsgrad mit Werten von 0,75 bis 0,9999, die Katalysator-Beladung A mit Werten von 0,001 bis 0,1 und der Druckverlust über die Wirbelschicht $p_{diff}$ mit Werten von 5.000 bis 400.000 kg/m*s$^2$ variiert wurden.

Die Partikelfeststoffdichte $\rho_P$ kann näherungsweise als konstant angenommen werden. Die Fluiddichte $\rho_F$ liegt üblicherweise in einem Bereich von 1,5 bis 5 kg/m$^3$. Die kinematische Viskosität $\nu_F$ liegt üblicherweise in einem Bereich von 3*10$^{-6}$ bis 2,5*10$^{-5}$ m$^2$/s.

Bei der katalysierte Variante wurden nur zwei optimierte Fälle von Kombinationen aus K1 und K3 angegeben, um den Effekt von K2$_{kat}$ zu verdeutlichen. Aus den gewählten Parametern ergaben sich die Kennzahlen K1, K2$_{unkat}$, K2$_{kat}$ und K3. Zur Bewertung der ausgewählten Kombinationen K1, K2$_{unkat}$, K2$_{kat}$ und K3 und zur Definition der optimalen Bereiche wurde die Produktivität [kg/(kg*h)], also die produzierte Menge an Chlorsilanen pro Stunde [kg/h], bezogen auf die im Reaktor eingesetzte Menge an Arbeitskörnung [kg], zu Grunde gelegt. Als optimal bzw. akzeptabel gilt für beide Varianten eine Produktivität von > 0,01 kg/(kg*h).

Tabelle 1

| Experiment | K1 | K2$_{unkat}$ | K3 | Produktivität [kg/(kg*h)] |
|---|---|---|---|---|
| V1 | 0,84 | 2,61 | 4,08 | <0,01 |
| V2 | 2,94 | 1,64 | 7,61 | 0,225 |
| V3 | 3,46 | 1,90 | 7,25 | 0,287 |
| V4 | 1,37 | 2,16 | 6,80 | 0,087 |
| V5 | 5,54 | 0,32 | 10,87 | 0,137 |
| V6 | 3,92 | 2,24 | 0,78 | <0,01 |
| V7 | 2,68 | 2,33 | 31,80 | 0,331 |
| V8 | 3,92 | 2,24 | 39,14 | 0,360 |
| V9 | 2,40 | 12,28 | 71,36 | <0,01 |
| V10 | 2,95 | 3,28 | 75,14 | 0,501 |
| V11 | 3,43 | 3,01 | 43,96 | 0,293 |
| V12 | 4,33 | 1,90 | 40,77 | 0,420 |
| V13 | 3,27 | 1,71 | 18,12 | 0,344 |
| V14 | 5,62 | 0,19 | 10,87 | 0,021 |
| V15 | 4,50 | 5,14 | 96,11 | 0,444 |
| V16 | 4,06 | 5,78 | 84,46 | 0,627 |
| V17 | 5,10 | 5,36 | 103,10 | 0,534 |
| V18 | 4,80 | 6,93 | 178,39 | 0,112 |
| V19 | 5,07 | 4,46 | 180,57 | 0,216 |

(fortgesetzt)

| Experiment | K1 | K2$_{unkat}$ | K3 | Produktivität [kg/(kg*h)] |
|---|---|---|---|---|
| V20 | 4,55 | 3,82 | 441,73 | 0,199 |
| V21 | 2,40 | 0,0098 | 408 | <0,01 |
| V22 | 3,93 | 9,90 | 271,83 | 0,034 |
| V23 | 8,90 | 2,72 | 58,10 | 0,103 |
| V24 | 6,06 | 3,54 | 475,71 | 0,091 |
| V25 | 14,50 | 2,33 | 679,58 | <0,01 |
| V26 | 6,76 | 2,48 | 509,68 | 0,075 |
| V27 | 8,31 | 2,97 | 611,62 | 0,029 |
| V28 | 3,92 | 2,24 | 783 | <0,01 |

Tabelle 2

| Experiment | K1 | K2$_{kat}$ | K3 | Produktivität |
|---|---|---|---|---|
| V1 | 3,46 | 0,013 | 58,2 | 0,422 |
| V2 | 3,46 | 0,369 | 58,2 | 0,473 |
| V3 | 3,46 | 0,467 | 58,2 | 0,299 |
| V4 | 3,46 | 0,876 | 58,2 | 0,232 |
| V5 | 3,46 | 2,336 | 58,2 | 0,086 |
| V6 | 3,46 | 2,947 | 58,2 | 0,017 |
| V7 | 3,46 | 0,004 | 58,2 | <0,01 |
| V8 | 3,46 | 4,505 | 58,2 | <0,01 |
| V9 | 6,06 | 0,013 | 152,9 | 0,507 |
| V10 | 6,06 | 0,369 | 152,9 | 0,511 |
| V11 | 6,06 | 0,467 | 152,9 | 0,320 |
| V12 | 6,06 | 0,876 | 152,9 | 0,245 |
| V13 | 6,06 | 2,336 | 152,9 | 0,091 |
| V14 | 6,06 | 2,947 | 152,9 | 0,019 |
| V15 | 6,06 | 0,004 | 152,9 | <0,01 |
| V16 | 6,06 | 4,505 | 152,9 | <0,01 |

Die Experimente belegen, dass sich für beide Varianten der HC besonders produktiv Chlorsilane herstellen lassen, wenn das Verfahren in den optimalen Bereichen der Kennzahlen K1, K2$_{unkat}$, K2$_{kat}$ und K3 durchgeführt werden.

**Patentansprüche**

1. Verfahren zur Herstellung von Chlorsilanen in einem Wirbelschichtreaktor durch Umsetzung von einem Chlorwasserstoff enthaltenden Reaktionsgas mit einer partikulären Kontaktmasse, enthaltend Silicium und gegebenenfalls einen Katalysator, wobei die Chlorsilane die allgemeinen Formel $H_nSiCl_{4-n}$ und/oder $H_mCl_{6-m}Si_2$ mit n = 1-3 und m = 0-4 aufweisen, **dadurch gekennzeichnet, dass**

   - das Reaktordesign beschrieben ist durch eine Kennzahl

$$K1 = \varphi \cdot \frac{V_{Reaktor,eff}}{A_{ges,gekühlt} \cdot d_{hyd}},$$

   mit

   $\varphi$ = Füllgrad des Reaktors,
   $V_{Reaktor,eff}$ = effektives Reaktorvolumen [m$^3$],

$A_{ges,gekühlt}$ = Summe gekühlter Oberflächen im Reaktor [m²] ,
$d_{hyd}$ = hydraulischer Reaktordurchmesser [m],
wobei $V_{Reaktor,eff}$ 1 bis 60 m³ und $d_{hyd}$ 0,7 bis 1,8 m betragen;

- die Beschaffenheit der Kontaktmasse ohne Katalysator beschrieben ist durch eine Kennzahl

$$K2_{unkat} = R_{Si} \cdot \frac{B_{AK}}{d_{32}},$$

mit

$B_{AK}$ = Breite der Partikelgrößenverteilung der Kontaktmasse [µm],
$d_{32}$ = Partikel-Sauterdurchmesser [µm],
$R_{Si}$ = Reinheitsgrad des Siliciums,
wobei $B_{AK}$ 10 bis 1.500 µm und $d_{32}$ 10 bis 1.000 µm betragen;

- die Beschaffenheit der Kontaktmasse mit Katalysator beschrieben ist durch eine Kennzahl

$$K2_{kat} = \frac{\delta_{rel}}{R_{Si}},$$

mit

$\delta_{rel}$ = relative Katalysatorverteilung in der Kontaktmasse,
wobei $\delta_{rel}$ 0,005 bis 3 und $R_{Si}$ 0,75 bis 0,9999 betragen;

- die Reaktionsbedingungen beschrieben sind durch eine Kennzahl

$$K3 = \frac{u_L}{v_F \cdot 10^6} \cdot \frac{p_{diff}}{g} \cdot \frac{1}{\rho_F},$$

mit

$u_L$ = Gaslehrrohrgeschwindigkeit [m/s],
$v_F$ = kinematische Viskosität des Fluids [m²/s],
$\rho_F$ = Fluiddichte [kg/m³],
$p_{diff}$ = Druckverlust über die Wirbelschicht [kg/m*s²], wobei $u_L$ 0,05 bis 4 m/s, $v_F$ 3*10⁻⁶ bis 2,5*10⁻⁵ m²/s, $\rho_F$ 1,5 bis 5 kg/m³ und $p_{diff}$ 10.000 bis 400.000 kg/m*s² betragen;

und wobei K1 einen Wert von 1 bis 10, $K2_{unkat}$ einen Wert von 0,1 bis 10, $K2_{kat}$ einen Wert von 0,005 bis 3 und K3 einen Wert von 1 bis 700 aufweist.

2. Verfahren nach Anspruch 1, **dadurch gekennzeichnet, dass** K1 einen Wert von 1,2 bis 9, bevorzugt von 1,3 bis 7, besonders bevorzugt von 1,5 bis 5,5, aufweist.

3. Verfahren nach Anspruch 1 oder 2, **dadurch gekennzeichnet, dass** $K2_{unkat}$ einen Wert von 0,5 bis 8, bevorzugt von 0,75 bis 6, besonders bevorzugt von 1 bis 5, aufweist.

4. Verfahren nach Anspruch 1 oder 2, **dadurch gekennzeichnet, dass** $K2_{kat}$ einen Wert von 0,0075 bis 2, bevorzugt von 0,009 bis 1, besonders bevorzugt von 0,01 bis 0,5, aufweist.

5. Verfahren nach einem der vorhergehenden Ansprüche, **dadurch gekennzeichnet, dass** K3 einen Wert von 1,5 bis 600, bevorzugt von 2 bis 450, besonders bevorzugt von 3 bis 300, aufweist.

6. Verfahren nach einem der vorhergehenden Ansprüche, **dadurch gekennzeichnet, dass** das effektive Reaktorvolumen $V_{Reaktor,eff}$ 3 bis 40 m$^3$, bevorzugt 4 bis 30 m$^3$, beträgt.

7. Verfahren nach einem der vorhergehenden Ansprüche, **dadurch gekennzeichnet, dass** der hydraulische Anlagendurchmesser $d_{hyd}$ 0,8 bis 1,7 m, bevorzugt 0,9 bis 1,6 m, beträgt.

8. Verfahren nach einem der vorhergehenden Ansprüche, **dadurch gekennzeichnet, dass** der Druckverlust über die Wirbelschicht $p_{diff}$ 20.000 bis 100.000 kg/m*s$^2$, bevorzugt 30.000 bis 80.000 kg/m*s$^2$, beträgt.

9. Verfahren nach einem der vorhergehenden Ansprüche, **dadurch gekennzeichnet, dass** der Partikel-Sauterdurchmesser $d_{32}$ 50 bis 800 $\mu$m, bevorzugt 100 bis 500 $\mu$m, beträgt.

10. Verfahren nach einem der vorhergehenden Ansprüche, **dadurch gekennzeichnet, dass** die Breite der Partikelgrößenverteilung der Kontaktmasse $B_{AK}$ 100 bis 1.000 $\mu$m, bevorzugt 100 bis 550 $\mu$m, beträgt.

11. Verfahren nach einem der vorhergehenden Ansprüche, **dadurch gekennzeichnet, dass** die relative Katalysatorverteilung in der Kontaktmasse $\delta_{rel}$ 0,009 bis 2, bevorzugt 0,01 bis 0,5, beträgt.

12. Verfahren nach einem der vorhergehenden Ansprüche, **dadurch gekennzeichnet, dass** die Gaslehrrohrgeschwindigkeit $u_L$ 0,06 bis 2 m/s, bevorzugt 0,1 bis 1 m/s, insbesondere 0,15 bis 0,55 m/s, beträgt.

13. Verfahren nach einem der vorhergehenden Ansprüche, **dadurch gekennzeichnet, dass** der absolute Druck im Wirbelschichtreaktor 0,1 bis 1 MPa, bevorzugt 0,13 bis 0,7 MPa, besonders bevorzugt 0,15 bis 0,5 MPa, beträgt.

14. Verfahren nach einem der vorhergehenden Ansprüche, **dadurch gekennzeichnet, dass** es in einem Temperaturbereich von 280 bis 380°C, bevorzugt 300 bis 380°C, besonders bevorzugt 320 bis 360°C, durchgeführt wird.

15. Verfahren nach einem der vorhergehenden Ansprüche, **dadurch gekennzeichnet, dass** es in einen Verbund zur Herstellung von polykristallinem Silicium eingebunden ist.

**Claims**

1. Process for producing chlorosilanes in a fluidized bed reactor by reaction of a hydrogen chloride-containing reaction gas with a particulate contact mass containing silicon and optionally a catalyst, wherein the chlorosilanes have the general formula H$_n$SiCl$_{4-n}$ and/or H$_m$Cl$_{6-m}$Si$_2$ where n = 1-3 and m = 0-4, **characterized in that**

- the reactor design is described by an index

$$K1 = \varphi \cdot \frac{V_{reactor,\ eff}}{A_{tot,\ cooled} \cdot d_{hyd}},$$

where

$\varphi$ = fill level of the reactor,
$V_{reactor,\ eff}$ = effective volume of the reactor [m$^3$],
$A_{tot,\ cooled}$ = sum of cooled surface areas in the reactor [m$^2$],
$d_{hyd}$ = hydraulic reactor diameter [m],
wherein $V_{reactor,\ eff}$ is 1 to 60 m$^3$ and $d_{hyd}$ is 0.7 to 1.8 m;

- the constitution of the contact mass without catalyst is described by an index

$$K2_{uncat} = R_{Si} \cdot \frac{B_{AK}}{d_{32}},$$

where

$B_{AK}$ = breadth of the particle size distribution of the contact mass [pm],
$d_{32}$ = particle Sauter diameter [pm],
$R_{Si}$ = purity of the silicon,
wherein $B_{AK}$ is 10 to 1500 $\mu$m and $d_{32}$ is 10 to 1000 $\mu$m;

- the constitution of the contact mass with catalyst is described by an index

$$K2_{cat} = \frac{\delta_{rel}}{R_{Si}},$$

where

$\delta_{rel}$ = relative catalyst distribution in the contact mass,
wherein $\delta_{rel}$ is 0.005 to 3 and $R_{Si}$ is 0.75 to 0.9999;

- the reaction conditions are described by an index

$$K3 = \frac{u_L}{v_F \cdot 10^6} \cdot \frac{p_{diff}}{g} \cdot \frac{1}{\rho_F},$$

where

$u_L$ = superficial gas velocity [m/s],
$v_F$ = kinematic viscosity of the fluid [m$^2$/s],
$\rho_F$ = fluid density [kg/m$^3$] and
$p_{diff}$ = pressure drop over fluidized bed [kg/m*s$^2$], wherein $u_L$ is 0.05 to 4 m/s, $v_F$ is $3*10^{-6}$ to $2.5*10^{-5}$ m$^2$/s, $\rho_F$ is 1.5 to 5 kg/m$^3$ and $p_{diff}$ is 10 000 to 400 000 kg/m*s$^2$;

and wherein K1 has a value of 1 to 10, K2$_{uncat}$ has a value of 0.1 to 10, K2$_{cat}$ has a value of 0.005 to 3 and K3 has a value of 1 to 700.

2. Process according to Claim 1, **characterized in that** K1 has a value of 1.2 to 9, preferably of 1.3 to 7, particularly preferably of 1.5 to 5.5.

3. Process according to Claim 1 or 2, **characterized in that** K2$_{uncat}$ has a value of 0.5 to 8, preferably of 0.75 to 6, particularly preferably of 1 to 5.

4. Process according to Claim 1 or 2, **characterized in that** K2$_{cat}$ has a value of 0.0075 to 2, preferably of 0.009 to 1, particularly preferably of 0.01 to 0.5.

5. Process according to any of the preceding claims, **characterized in that** K3 has a value of 1.5 to 600, preferably of 2 to 450, particularly preferably of 3 to 300.

6. Process according to any of the preceding claims, **characterized in that** the effective reactor volume $V_{Reactor\ eff}$ is 3 to 40 m$^3$, preferably 4 to 30 m$^3$.

7. Process according to any of the preceding claims, **characterized in that** the hydraulic plant diameter $d_{hyd}$ is 0.8 to 1.7 m, preferably 0.9 to 1.6 m.

8. Process according to any of the preceding claims, **characterized in that** the pressure drop over the fluidized bed $p_{diff}$ is 20 000 to 100 000 kg/m*s$^2$, preferably 30 000 to 80 000 kg/m*s$^2$.

9. Process according to any of the preceding claims, **characterized in that** the particle Sauter diameter $d_{32}$ is 50 to 800 $\mu$m, preferably 100 to 500 $\mu$m.

10. Process according to any of the preceding claims, **characterized in that** the breadth of the particle size distribution of the contact mass $B_{AK}$ is 100 to 1000 μm, preferably 100 to 550 μm.

11. Process according to any of the preceding claims, **characterized in that** the relative catalyst distribution in the contact mass $\delta_{rel}$ is 0.009 to 2, preferably 0.01 to 0.5.

12. Process according to any of the preceding claims, **characterized in that** the superficial gas velocity $u_L$ is 0.06 to 2 m/s, preferably 0.1 to 1 m/s, in particular 0.15 to 0.55 m/s.

13. Process according to any of the preceding claims, **characterized in that** the absolute pressure in the fluidized bed reactor is 0.1 to 1 MPa, preferably 0.13 to 0.7 MPa, particularly preferably 0.15 to 0.5 MPa.

14. Process according to any of the preceding claims, **characterized in that** it is performed in a temperature range of 280°C to 380°C, preferably 300°C to 380°C, particularly preferably 320°C to 360°C.

15. Process according to any of the preceding claims, **characterized in that** it is integrated into an integrated system for production of polycrystalline silicon.

**Revendications**

1. Procédé de préparation de chlorosilanes dans un réacteur à couche tourbillonnante par transformation d'un case de réaction contenant du chlorure d'hydrogène avec une masse de contact particulaire, contenant du silicium et éventuellement un catalyseur, les chlorosilanes présentant la formule générale $H_nSiCl_{4-n}$ et/ou $H_mCl_{6-m}Si_2$ avec n = 1 à 3 et m = 0 à 4, **caractérisé en ce que**

    - le design de réacteur est décrit par un indicateur

$$K1 = \varphi \cdot \frac{V_{réacteur,eff}}{A_{tot,refroidi} \cdot d_{hyd}},$$

    avec

        $\varphi$ = degré de remplissage du réacteur,
        $V_{réacteur,eff}$ = volume efficace du réacteur [m³],
        $A_{tot,refroidi}$ = somme des surfaces refroidies dans le réacteur [m²],
        $d_{hyd}$ = diamètre hydraulique du réacteur [m], $V_{réacteur,eff}$ étant de 1 à 60 m³ et $d_{hyd}$ étant de 0,7 à 1,8 m ;

    - la constitution de la masse de contact sans catalyseur est décrite par un indicateur

$$K2_{sans\ cat} = R_{Si} \cdot \frac{B_{AK}}{d_{32}},$$

    avec

        $B_{AK}$ = largeur de la distribution de taille de particules de la masse de contact [pm],
        $d_{32}$ = diamètre de Sauter des particules [pm],
        $R_{Si}$ = degré de pureté du silicium,
        $B_{AK}$ étant de 10 à 1 500 μm et $d_{32}$ étant de 10 à 1 000 μm ;

    - la constitution de la masse de contact avec catalyseur est décrite par un indicateur

$$K2_{cat} = \frac{\delta_{rel}}{R_{Si}},$$

    avec

$\delta_{rel}$ = distribution relative de catalyseur dans la masse de contact,
$\delta_{rel}$ étant de 0,005 à 3 et $R_{Si}$ étant de 0,75 à 0,9999 ;

- les conditions de réaction sont décrites par un indicateur

$$K3 = \frac{u_L}{v_F \cdot 10^6} \cdot \frac{p_{diff}}{g} \cdot \frac{1}{\rho_F},$$

avec

$u_L$ = vitesse superficielle de gaz [m/s],
$v_F$ = viscosité cinématique du fluide [m$^2$/s],
$\rho_F$ = densité du fluide [kg/m$^3$] and
$p_{diff}$ = chute de pression au-dessus de la couche tourbillonnante [kg/m*s$^2$],
$u_L$ étant de 0,05 à 4 m/s, $v_F$ étant de 3*10$^{-6}$ à 2,5*10$^{-5}$ m$^2$/s, $\rho_F$ étant de 1,5 à 5 kg/m$^3$ et $p_{diff}$ étant de 10 000 à 400 000 kg/m*s$^2$ ;

et K1 présentant une valeur de 1 à 10, K2$_{non\ cat}$ présentant une valeur de 0,1 à 10, K2$_{cat}$ présentant une valeur de 0,005 à 3 et K3 présentant une valeur de 1 à 700.

2. Procédé selon la revendication 1, **caractérisé en ce que** K1 présente une valeur de 1,2 à 9, préférablement de 1,3 à 7, particulièrement préférablement de 1,5 à 5,5.

3. Procédé selon la revendication 1 ou 2, **caractérisé en ce que** K2$_{non\ cat}$ présente une valeur de 0,5 à 8, préférablement de 0,75 à 6, particulièrement préférablement de 1 à 5.

4. Procédé selon la revendication 1 ou 2, **caractérisé en ce que** K2$_{cat}$ présente une valeur de 0,0075 à 2, préférablement de 0,009 à 1, particulièrement préférablement de 0,01 à 0,5.

5. Procédé selon l'une quelconque des revendications précédentes, **caractérisé en ce que** K3 présente une valeur de 1,5 à 600, préférablement de 2 à 450, particulièrement préférablement de 3 à 300.

6. Procédé selon l'une quelconque des revendications précédentes, **caractérisé en ce que** le volume efficace du réacteur $V_{réacteur,eff}$ est de 3 à 40 m$^3$, préférablement de 4 à 30 m$^3$.

7. Procédé selon l'une quelconque des revendications précédentes, **caractérisé en ce que** le diamètre hydraulique de l'installation $d_{hyd}$ est de 0,8 à 1,7 m, préférablement de 0,9 à 1,6 m.

8. Procédé selon l'une quelconque des revendications précédentes, **caractérisé en ce que** la chute de pression au-dessus de la couche tourbillonnante $p_{diff}$ est de 20 000 à 100 000 kg/m*s$^2$, préférablement de 30 000 à 80 000 kg/m*s$^2$.

9. Procédé selon l'une quelconque des revendications précédentes, **caractérisé en ce que** le diamètre de Sauter des particules $d_{32}$ est de 50 à 800 $\mu$m, préférablement de 100 à 500 $\mu$m.

10. Procédé selon l'une quelconque des revendications précédentes, **caractérisé en ce que** la largeur de la distribution de taille de particules de la base de contact $B_{AK}$ est de 100 à 1 000 $\mu$m, préférablement de 100 à 550 $\mu$m.

11. Procédé selon l'une quelconque des revendications précédentes, **caractérisé en ce que** la distribution relative du catalyseur dans la base de contact $\delta_{rel}$ est de 0,009 à 2, préférablement de 0,01 à 0,5.

12. Procédé selon l'une quelconque des revendications précédentes, **caractérisé en ce que** la vitesse superficielle de gaz $u_L$ est de 0,06 à 2 m/s, préférablement de 0,1 à 1 m/s, en particulier de 0,15 à 0,55 m/s.

13. Procédé selon l'une quelconque des revendications précédentes, **caractérisé en ce que** la pression absolue dans le réacteur à couche tourbillonnante est de 0,1 à 1 MPa, préférablement de 0,13 à 0,7 MPa, particulièrement préférablement de 0,15 à 0,5 MPa.

**14.** Procédé selon l'une quelconque des revendications précédentes, **caractérisé en ce qu'**il est réalisé dans une plage de température de 280 à 380 °C, préférablement de 300 à 380 °C, particulièrement préférablement de 320 à 360 °C.

**15.** Procédé selon l'une quelconque des revendications précédentes, **caractérisé en ce qu'**il est intégré dans un système intégré pour la préparation de silicium polycristallin.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2010028878 A1
- WO 2016198264 A1
- WO 0248024 A2
- DE 3938897 A1
- DE 102008041974 A1
- DE 19740923 A1
- US 4092446 A

**In der Beschreibung aufgeführte Nicht-Patentliteratur**

- **W.-D. HERGETH.** On-Line Monitoring of Chemical Reactions: Ullmann's Encyclopedia of Industrial Chemistry. Wiley, 2006